# DEMANDE DE BREVET EUROPEEN

(11) **EP 4 825 664 A1**
(43) Date de publication de la demande: **21.10.2026**
(21) Numéro de dépôt: 26168346.0
(22) Date de dépôt: 27.03.2026
(51) Int. Cl.: B60R 13/04, B60R 19/42

(54) **GARNITURE DE PROTECTION DE BAS DE PORTIÈRE**

(30) Priorité: 16.04.2025 FR 2504058
(71) Demandeur: Renault s.a.s, 92100 Boulogne Billancourt (FR)
(72) Inventeur: DE MAGNEVAL, Gilles, 78280 GUYANCOURT (FR); BRUNEL, Franck, 78280 GUYANCOURT (FR)

(57) **Abrégé**

L'invention concerne une garniture de protection (72) d'un bas de portière (18) comprenant une paroi extérieure (20) et une paroi intérieure (22) se rejoignant pour former une aile inférieure (28), ladite garniture comprenant une plaque profilée (32) présentant une face externe (36) et une face interne (34), une partie supérieure (38) et une partie inférieure (40) longée par une bordure inférieure (42), ladite partie inférieure venant s'étendre en regard de ladite face interne (34), tandis que ladite bordure inférieure (42) est reliée à ladite paroi interne (22) pour que ladite partie inférieure (40) recouvre ladite aile inférieure libre (28). Ladite bordure inférieure (42) s'étend en retour vers ladite face interne (34), et ladite partie inférieure (40) comprend une nervure (44) dressée sur ladite face interne (34) en regard de ladite bordure inférieure (42) pour former une rainure (46), ladite aile inférieure (28) étant adaptée à venir s'étendre à l'intérieur de ladite rainure.

## Description

La présente invention se rapporte à une garniture de protection d'un bas de portière de véhicule automobile.

Une telle garniture est notamment mise en œuvre afin de préserver les bas de portière de véhicule automobile durant leur montage sur les chaînes de fabrication.

De surcroît, elle concerne plus spécifiquement les véhicules comprenant des portières recouvrantes, autrement dit, des portières qui viennent recouvrir entièrement les côtés de la caisse du véhicule.

Le bas des portières comprend deux parois opposées, une paroi extérieure et une paroi intérieure définissant un caisson. Et ces deux parois convergent l'une vers l'autre et se rejoignent pour être serties et soudées ensemble, et former une seule aile inférieure libre s'étendant en saillie du caisson sensiblement verticalement.

Aussi, il est connu de venir protéger le bas de ces portières avec des garnitures de protection pour éviter leur endommagement, notamment, au cours des étapes de construction sur une chaîne de montage.

En effet, lorsque les véhicules sont suspendus, sur les chaînes de montage, par l'intermédiaire d'une balancelle, les bas de portière tendent à interagir avec la structure de la balancelle et à être endommagés.

Ainsi, les garnitures de protection mises en œuvre comprennent usuellement une plaque profilée réalisée dans un matériau polymère. Cette plaque présente une face externe opposée à une face interne. De plus, elle présente une partie supérieure adaptée à être reliée à la paroi extérieure du bas de portière, et une partie inférieure adaptée à venir s'étendre en retour en regard de la face interne de la plaque profilée pour pouvoir être reliée à la paroi interne. De la sorte, la garniture vient recouvrir le bas de portière et le protéger.

Cependant, cette garniture de protection est généralement réalisée en deux parties, une partie structurelle qui intègre les éléments de fixation et une peau qui la recouvre. Une telle garniture est relativement complexe et elle est d'un coût non négligeable. Aussi, un problème qui se pose et que vise à résoudre la présente invention est de fournir une garniture de protection de bas de portière plus simple à mettre en œuvre et moins coûteuse.

Dans le but de résoudre ce problème, il est proposé une garniture de protection d'un bas de portière de véhicule automobile, ledit bas de portière comprenant une paroi extérieure opposée à une paroi intérieure, les deux parois convergeant l'une vers l'autre et se rejoignant pour former une seule aile inférieure libre, ladite garniture comprenant une plaque profilée présentant d'une part une face externe opposée à une face interne et d'autre part, une partie supérieure et une partie inférieure longée par une bordure inférieure, ladite partie inférieure de ladite plaque profilée venant s'étendre en retour en regard de ladite face interne de manière à pouvoir appliquer ladite partie supérieure contre ladite paroi extérieure dudit bas de portière, tandis que ladite bordure inférieure est reliée à ladite paroi interne pour que ladite partie inférieure de ladite plaque profilée recouvre ladite aile inférieure libre.

Ladite bordure inférieure s'étend en retour vers ladite face interne, et ladite partie inférieure comprend en outre une nervure dressée sur ladite face interne en regard de ladite bordure inférieure en retour pour former une rainure, ladite aile inférieure étant adaptée à venir s'étendre à l'intérieur de ladite rainure.

Ainsi, une caractéristique de l'invention réside dans la mise en œuvre d'une plaque profilée dont la partie inférieure comprend une rainure formée par la bordure inférieure en retour et une nervure dressée en regard de la bordure. De la sorte, on vient rapporter la garniture sensiblement inclinée sous le bas de portière de manière à pouvoir engager l'aile libre inférieure à l'intérieur de la rainure, puis on bascule l'ensemble de la garniture, de manière à appliquer la partie supérieure contre la paroi externe de façon à les relier ensemble. La garniture est ainsi simple à réaliser et aussi à installer sur le bas de la portière.

S'agissant du montage en effet, la partie inférieure de la plaque profilée est simplement accrochée dans l'aile inférieure libre, tandis que la seule partie supérieure est fixée contre la paroi externe du bas de portière.

Selon un mode de mise en œuvre de l'invention particulièrement avantageux, la garniture comporte en outre, dans le prolongement de ladite partie supérieure, un panneau et un volet articulé sur ledit panneau, ledit volet étant apte à être replié vers ledit panneau pour être relié à ladite partie inférieure en formant un caisson de section triangulaire. De la sorte, on forme sous la partie inférieure et à l'aplomb de l'aile inférieure libre, une structure en caisson triangulaire formant également poutre. Cette structure alors rigide, constitue une protection complémentaire de l'aile inférieure libre du bas de portière.

Préférentiellement, ledit volet est adapté à être relié à ladite bordure inférieure. De la sorte, le volet est relativement écarté du panneau, ce qui permet de former un caisson de section triangulaire relativement volumineux, comme on l'expliquera plus en détail dans la suite de la description.

Avantageusement, ledit volet comprend selon l'invention, un bord d'accrochage adapté à être relié à ladite partie inférieure. Préférentiellement, ledit volet comporte des crochets s'étendant espacés les uns des autre en saillie dudit bord d'accrochage. Les crochets présentent chacun une forme de languette sensiblement rectangulaire terminée par un bord libre. Aussi l'épaisseur de la languette s'accroît depuis le bord libre vers le bord d'accrochage du volet jusqu'à un décrochement où l'épaisseur se réduit à nouveau.

Et selon l'invention, de manière particulièrement avantageuse, ladite partie inférieure présente une rangée de fentes adaptées à recevoir respectivement lesdits crochets. Ainsi, les languettes précitées sont adaptées être engagées à travers les fentes et à y être entraînées à force jusqu'à ce que le décrochement précité vienne s'étendre au droit de la paroi de la partie inférieure. De la sorte, la languette est prisonnière de la paroi inférieure et en conséquence, le volet est maintenu en position fixe contre la paroi inférieure.

Préférentiellement, ladite rangée de fentes est pratiquée selon l'invention dans ladite bordure inférieure. Ainsi, les languettes s'étendent sensiblement perpendiculairement au volet et elles viennent en prise dans la bordure inférieure. Avantageusement, les fentes sont pratiquées à la base de la bordure inférieure en retour. De la sorte, les languettes viennent en appui contre la face interne de la partie inférieure. Autrement dit, les languettes viennent s'étendre dans le fond de la rainure et elles sont adaptées à venir s'appuyer à l'opposé contre l'aile libre inférieure.

Par ailleurs, ladite partie supérieure comprend une rangée d'agrafes montée sur la face interne. Autrement dit, la partie supérieure de la plaque profilée est équipée d'agrafes, tandis que la paroi externe présente des orifices correspondants. Les agrafes sont alors enfoncées à force à travers les orifices, tandis que la partie supérieure de la plaque profilée est appliquée contre la paroi externe du bas de portière. Les agrafes présentent une partie en saillie élastiquement déformable qui est alors emprisonné à travers les orifices.

Selon un mode de réalisation de l'invention particulièrement avantageux, la garniture comprend en outre deux joues aux deux extrémités respectivement de ladite plaque profilée. De la sorte, la garniture préserve non seulement l'arête de l'aile libre inférieure, mais aussi ses deux extrémités opposées par l'intermédiaire des deux joues. De surcroît, les deux joues permettent d'ajuster parfaitement, selon une direction latérale la garniture par rapport au bas de portière. Ainsi, lorsque la garniture est basculée vers la paroi externe, les agrafes viennent directement s'engager dans les orifices prévus.

Aussi, selon l'invention, ladite plaque profilée, ledit panneau et ledit volet sont préférentiellement moulés ensemble d'une seule pièce dans un matériau polymère. Ils sont par exemple moulés dans du polyéthylène ou du polyamide.

Ainsi, on prévoit le moulage d'une bande mince entre le panneau et le volet de manière à former une charnière, grâce à la déformation du matériau polymère.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
[Fig. 1] est une vue schématique illustrant le contexte de l'invention ;
[Fig. 2] est une vue schématique de détail en coupe droite de l'objet de la [Fig. 1];
[Fig. 3] est une vue schématique en coupe droite de l'objet de l'invention dans un premier état ;
[Fig. 4] est une vue schématique de l'objet de la [Fig. 3] dans un deuxième état ;
[Fig. 5] est une vue schématique en perspective de l'objet de la [Fig. 4] ;
[Fig. 6] est une vue schématique en coupe droite de l'objet de la [Fig. 4] couplé à celui de la [Fig. 2] dans une première situation ; et,
[Fig. 7] est une vue schématique en coupe droite de l'objet de la [Fig. 6] dans une seconde situation.

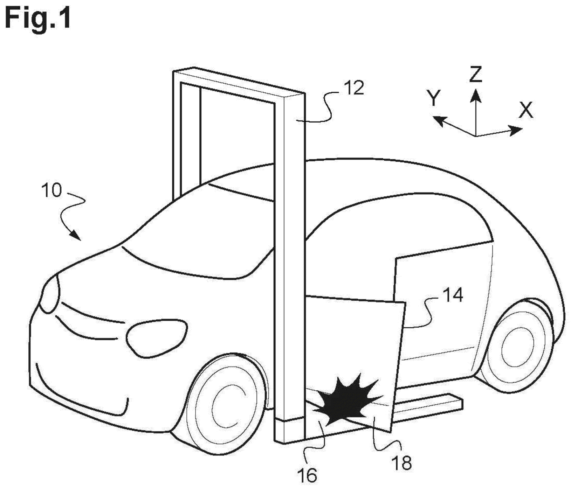

La [Fig. 1] montre en perspective un véhicule automobile 10 suspendu par l'intermédiaire d'une balancelle 12.

Le véhicule automobile 10 s'inscrit dans un repère orthogonal X, Y, Z, du véhicule automobile, dans lequel l'axe X s'étend selon une direction longitudinale avant-arrière, orienté vers l'arrière ; l'axe Y s'étend selon une direction transversale du véhicule, orienté de la gauche vers la droite lorsque l'on est en situation de roulage ; et l'axe Z s'étend selon une direction verticale, orienté à l'opposé du sol.

Aussi, le véhicule automobile 10 présente sur la [Fig. 1], une portière avant gauche 14 pivotée vers l'extérieur du véhicule 10.

Quant à la balancelle 12, elle comporte une traverse inférieure d'appui 16 sur laquelle le véhicule automobile 10 est en appui.

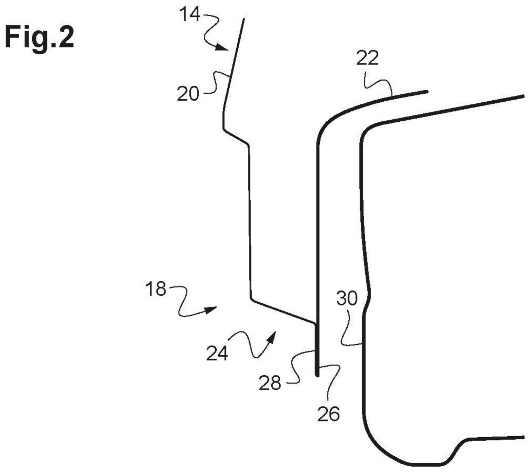

Aussi, compte tenu des tolérances dimensionnelles acceptées des différents éléments, la portière 14 présente un bas de portière 18 qui peut venir heurter la traverse 16 de la balancelle 12 au cours du cheminement du véhicule 10 dans la chaîne de montage. On décrira en référence à la [Fig. 2], le bas de portière 18, lorsque la portière 14 du véhicule automobile 10 est refermée.

Ainsi, la portière 14 comporte une paroi extérieure métallique 20 et une paroi intérieure opposée 22. Ces deux parois s'étendent en regard l'une de l'autre dans le bas de portière 18 en formant caisson, et elles convergent l'une vers l'autre pour se rejoindre. Aussi, la paroi extérieure 20 présente une double pliure en Z 24 et une bordure repliée 26 et sertie, emprisonnant la bordure de la paroi intérieure 22 en formant une aile inférieure libre 28. L'aile inférieure libre 28, vient ainsi refermer le bas de portière 18 en formant caisson.

Le bas de portière 18 vient alors s'appliquer en regard du bas de caisse 30. Un joint anti-salissure, non représenté, est appliquée entre les deux.

Aussi, il convient de préserver le bas de portière 18, qui peut venir heurter la traverse 16 de la balancelle 12 comme indiqué ci-dessus.

Pour ce faire, on équipe le bas de portière 18 d'une garniture de protection que l'on va décrire à présent.

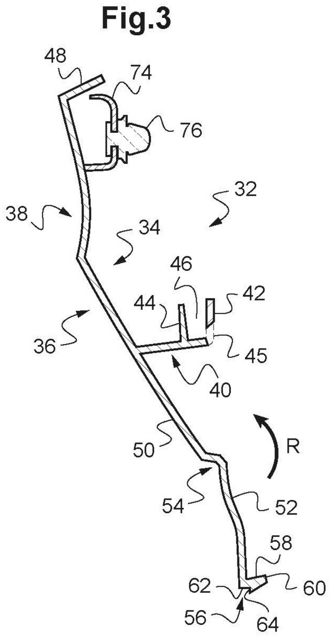

On se référera tout d'abord à la [Fig. 3] montrant en coupe droite une plaque profilée 32 moulée d'une seule pièce dans un matériau polymère, et ici par exemple, en polypropylène.

La plaque profilée 32 présente deux faces opposées, une face interne 34 et une face externe 36. Aussi, elle présente une partie supérieure 38 et une partie inférieure 40. La partie inférieure 40 est inclinée par rapport à la partie supérieure 38 vers la face interne 34. L'angle d'inclinaison est par exemple compris entre 45°et 80°. Au surplus, la partie inférieure 40 présente une bordure inférieure 42 s'étendant en retour vers la face interne 34.

En outre, la partie inférieure 40 comporte une nervure 44 dressée sur la face interne 34 en regard de la bordure inférieure 42 de manière à former une rainure 46 entre les deux.

Aussi, la bordure inférieure 42 présente de proche en proche et à sa base des fentes 45 d'une largeur prédéterminée. On en expliquera la fonction ci-après.

À l'opposé, de la bordure inférieure 42, la partie supérieure 38 présente une bordure supérieure 48 s'étendant également en retour vers la face interne 34.

Par ailleurs, la partie supérieure 38 se prolonge par un panneau 50 s'étendant sous la partie inférieure 40 et en formant un angle aigu avec lui. Et le panneau 50 se prolonge à son tour par un volet 52. Le panneau 50 et le volet 52 sont séparés l'un de l'autre par une zone amincie 54. De plus, ils présentent sensiblement la même largeur. De plus, le volet 52 présente une bordure d'accrochage 56. La bordure d'accrochage 56 comporte des languettes 58 recourbées en retour vers la face interne 34 et espacées de proche en proche au droit des fentes 45. Les languettes 58 présentent un bord libre 60, et leur épaisseur s'accroit du bord libre 60 jusqu'à un décrochement 62, faisant apparaître un épaulement 64. Les languettes 58 présentent, au niveau du bord libre 60, une épaisseur inférieure à la hauteur des fentes 45, tandis que l'épaisseur est sensiblement supérieure à la hauteur des fentes 45, juste avant le décrochement 62. Et comme on va l'expliquer ci-après, l'épaulement 64 de la languette 58 permet de former un crochet anti-retour.

Ainsi, le volet 52 est plié vers la partie inférieure 40 de la plaque profilée 32 selon la flèche R. Et le pliage s'opère au niveau de la zone amincie 54 où le matériau polymère se déforme plastiquement.

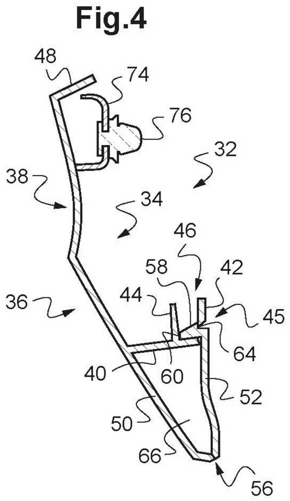

Aussi, les languettes 58 étant situées au droit des fentes 45, on engage tout d'abord les bords libres 60 à travers ces fentes 45. Puis on entraîne à force les languettes à travers ces fentes 45, tandis qu'elles se compriment alors que la hauteur des fentes 45 augmente sensiblement. Lorsque le décrochement 62 des languettes 58 vient s'étendre au niveau de la paroi de la bordure inférieure 42, la pression exercée sur les languettes 58 disparaît et elles se relâchent. De la sorte, l'épaulement 64 vient en prise sur le bord supérieur des fentes 45, comme illustré sur la [Fig. 4]. Les languettes 58 sont alors prisonnières de la bordure inférieure 42 et elles sont en appui dans le fond de la rainure 46.

Partant, la bordure d'accrochage 56 du volet 52 est solidaire de la partie inférieure 40 de la plaque profilée 32, au niveau de la base de la bordure inférieure 42.

De la sorte, la partie inférieure 40, le panneau 50 et le volet 52 forment ensemble une poutre 66, ou caisson, de section sensiblement triangulaire. Une telle poutre 66 constitue alors un élément rigide.

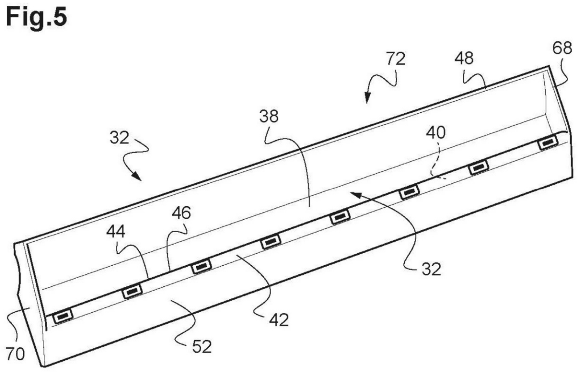

On retrouve en perspective sur la [Fig. 5] la plaque profilée 32 ainsi formée, vue sur la face interne 32. On retrouve également le volet 52 surmonté de la rainure 46. Aussi, apparait, la partie supérieure 38 longée par la bordure supérieure 48 ; la partie inférieure 40, étant masquée par le volet 52, la nervure 44 et la bordure inférieure 42. En outre, deux joues opposées 68, 70 sont rapportées respectivement aux deux extrémités de la plaque profilée 32 ainsi façonnée. Les deux joues opposées 68, 70 sont avantageusement moulées lors du moulage de la plaque profilée 32.

Les deux joues opposées 68, 70, s'étendent de la bordure supérieure 48 jusqu'à la zone amincie 54 en recouvrant les deux tranches opposées de la partie supérieure 38, de la partie inférieure 40 munie de sa bordure inférieure 42 et de sa nervure 44, du panneau 50, et du volet 52. De la sorte, on forme une garniture de protection 72 relativement rigide.

En outre, comme illustré sur les [Fig. 3] et [Fig. 4], on installe dans la partie supérieure 38 sur la face interne 34 et sous la bordure supérieure 48, une rampe profilée en U 74 équipée de proche en proche d'agrafes 76. Les agrafes 76 sont orientées à l'opposé de la face interne 34.

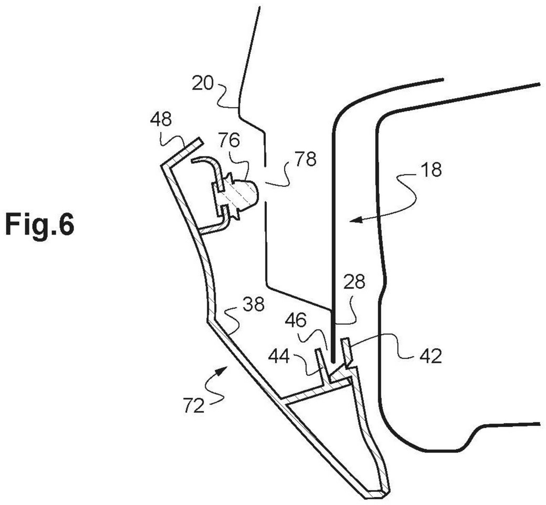

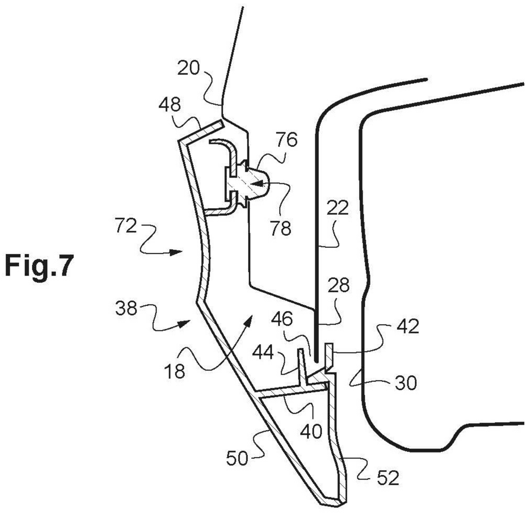

On se reportera à présent sur les [Fig. 6] puis [Fig. 7], montrant le montage des garnitures de protection 72 sur le bas de portière 18.

Ainsi, comme illustré sur la [Fig. 6], la paroi externe 20 du bas de portière 18 présente une rangée d'orifice 78 pratiqués de proche en proche à une distance constante de l'aile libre inférieure 28. Les orifices 78 sont espacés les uns des autres d'une distance correspondant à la distance séparant les agrafes 76 les unes des autres.

Dans une première étape de montage, on incline sensiblement la garniture de protection 72, de manière à venir porter la bordure inférieure 42 et la nervure 44 de part et d'autre de l'aile libre inférieure 28. Autrement dit, l'aile libre inférieure 28 vient en prise dans la rainure 46. Aussi, les deux joues opposées 68, 70 non représentés sur la [Fig. 6] sont ajustés au droit des deux extrémités opposées de l'aile libre inférieure 28.

On observera alors que, la partie supérieure 38 de la plaque profilée vient au regard de la paroi extérieure 20 et que, plus précisément, les agrafes 76 viennent respectivement en regard des orifices 78. Naturellement, ces orifices 78 sont pratiqués dans la paroi extérieure 20 à un niveau selon l'axe Z, et selon une composante X, prédéfinis pour que chaque agrafe 76 vienne s'étendre en regard d'un orifice 78. Ensuite, dans une deuxième étape de montage, on entraîne en pivotement la garniture de protection 72 autour de l'aile libre inférieure 28 pour engager chacune des agrafes 76 dans un orifice 78. Puis on presse à force la partie supérieure 38 contre la paroi extérieure 20 pour faire pénétrer les agrafes à travers les orifices 78, comme illustré sur la [Fig. 7].

De la sorte, la partie supérieure 38 est maintenue solidaire de la paroi externe 20, tandis que la partie inférieure 40 est maintenue accrochée dans l'aile libre inférieure 28, grâce à la bordure inférieure 42 et la nervure 44 formant la rainure 46.

Ainsi, la garniture de protection 72 est aisée à mettre en place dans le bas de portière 18.

Par ailleurs, elle permet de le préserver vis-à-vis, notamment de la traverse 16 de la balancelle 12. Aussi, la poutre 66 formée par la partie inférieure 40, le panneau 50 et le volet 52 constitue un élément rigide qui vient préserver plus encore le bas de portière 18.

## Revendications

1. Garniture de protection (72) d'un bas de portière (18) de véhicule automobile (10), ledit bas de portière comprenant une paroi extérieure (20) opposée à une paroi intérieure (22), les deux parois convergeant l'une vers l'autre et se rejoignant pour former une seule aile inférieure libre (28), ladite garniture comprenant une plaque profilée (32) présentant d'une part une face externe (36) opposée à une face interne (34) et d'autre part, une partie supérieure (38) et une partie inférieure (40) longée par une bordure inférieure (42), ladite partie inférieure de ladite plaque profilée venant s'étendre en retour en regard de ladite face interne (34) de manière à pouvoir appliquer ladite partie supérieure (38) contre ladite paroi extérieure (20) dudit bas de portière, tandis que ladite bordure inférieure (42) est reliée à ladite paroi interne (22) pour que ladite partie inférieure (40) de ladite plaque profilée recouvre ladite aile inférieure libre (28) ;
**caractérisée en ce que** ladite bordure inférieure (42) s'étend en retour vers ladite face interne (34), et **en ce que** ladite partie inférieure (40) comprend en outre une nervure (44) dressée sur ladite face interne (34) en regard de ladite bordure inférieure (42) en retour pour former une rainure (46), ladite aile inférieure (28) étant adaptée à venir s'étendre à l'intérieur de ladite rainure.

2. Garniture de protection selon la revendication 1, **caractérisée en ce qu'**elle comporte en outre dans le prolongement de ladite partie supérieure (38), un panneau (50) et un volet (52) articulé sur ledit panneau, ledit volet (52) étant apte à être replié vers ledit panneau (50) pour être relié à ladite partie inférieure (40) en formant un caisson (66) de section triangulaire.

3. Garniture de protection selon la revendication 2, **caractérisée en ce que** ledit volet (52) est adapté à être relié à ladite bordure inférieure (40).

4. Garniture de protection selon la revendication 2 ou 3, **caractérisée en ce que** ledit volet (52) comprend un bord d'accrochage (56) adapté à être relié à ladite partie inférieure (40).

5. Garniture de protection selon la revendication 4, **caractérisée en ce que** ledit volet (52) comporte des crochets (58) s'étendant espacés les unes des autre en saillie dudit bord d'accrochage (56).

6. Garniture de protection selon la revendication 5, **caractérisée en ce que** ladite partie inférieure (40) présente une rangée de fentes (45) adaptées à recevoir respectivement lesdits crochets (58).

7. Garniture de protection selon la revendication 6, **caractérisée en ce que** ladite rangée de fentes (45) est pratiquée dans ladite bordure inférieure (42).

8. Garniture de protection selon l'une quelconque des revendications 1 à 7, **caractérisée en ce que** ladite partie supérieure (38) comprend une rangée d'agrafes (76) montée sur la face interne (34).

9. Garniture de protection selon l'une quelconque des revendications 1 à 8, **caractérisée en ce qu'**elle comprend en outre deux joues (68, 70) aux deux extrémités respectivement de ladite plaque profilée (32).

10. Garniture de protection selon l'une quelconque des revendications 1 à 9, **caractérisée en ce que** ladite plaque profilée (32), ledit panneau (50) et ledit volet (52) sont moulés ensemble d'une seule pièce dans un matériau polymère.
